(19) **Europäisches Patentamt / European Patent Office / Office européen des brevets**

(11) **EP 0 917 229 B1**

(12) **EUROPEAN PATENT SPECIFICATION**

(45) Date of publication and mention of the grant of the patent:
**14.01.2009 Bulletin 2009/03**

(51) Int Cl.:
*H01M 10/46* (2006.01)

(21) Application number: **98921791.4**

(22) Date of filing: **25.05.1998**

(86) International application number:
**PCT/JP1998/002279**

(87) International publication number:
**WO 1998/053516 (26.11.1998 Gazette 1998/47)**

(54) **ELECTRONIC DEVICE SYSTEM WITH BATTERY PACK AND DETECTION MEANS OF BATTERY PACK ATTACHMENT**

ELEKTRONISCHES GERÄT MIT BATTERIESATZ UND MITTELN ZUR DETEKTION DER BATTERIEANKOPPLUNG

DISPOSITIF ÉLECTRONIQUE AVEC COFFRET À PILES ET DES MOYENS À DÉTECTER LEUR ACCOUPLAGE

(84) Designated Contracting States:
**DE FR GB**

(30) Priority: **23.05.1997 JP 13388797**

(43) Date of publication of application:
**19.05.1999 Bulletin 1999/20**

(73) Proprietor: **Sony Corporation**
**Tokyo 141-0001 (JP)**

(72) Inventors:
• **EGUCHI, Yasuhito**
**Shinagawa-ku**
**Tokyo 141-0001 (JP)**

• **YOSHIDA, Kazuhiko**
**Shinagawa-ku**
**Tokyo 141-0001 (JP)**

(74) Representative: **Müller, Frithjof E.**
**Müller Hoffmann & Partner**
**Patentanwälte**
**Innere Wiener Strasse 17**
**81667 München (DE)**

(56) References cited:
JP-A- 6 124 146      JP-A- 8 019 184
US-A- 5 619 117      US-A- 5 625 237
US-A- 5 629 604

## Description

Technical Field

This invention relates to such a battery pack to be loaded into an electronic equipment, e.g., portable personal computer to supply power, an electronic equipment system composed of a battery pack and an electronic equipment, and a loading detecting method for battery pack, which detects whether or not battery pack is loaded in an electronic equipment.

Background Art

When, e.g., portable electronic equipment is considered as electronic equipment, there are, e.g., the so-called note book type personal computer (hereinafter abbreviated as note book personal computer), information terminal, video tape recorder, sound recorder and/orpocket (portable) telephone, etc. as portable electronic equipment of this kind, and there is, e.g., electric bicycle provided with motor for power assist, etc. as electronic equipment which is not of the portable type.

Such electronic equipments are adapted so that battery pack for power supply (hereinafter called battery package as occasion may demand) is loaded for the purpose of power supply to supply power for operating equipment from that battery pack.

Explanation will be given by taking the example of note book personal computer and battery pack therefor as an example of the prior art.

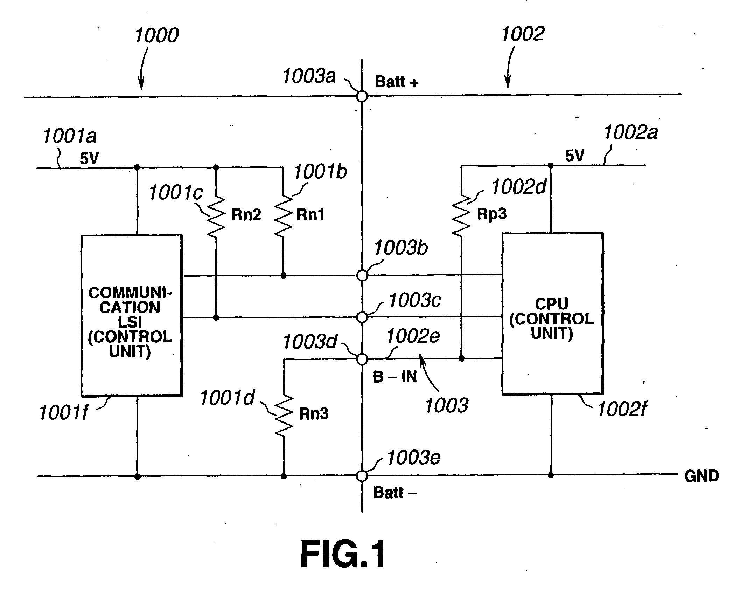

The function to detect whether or not conventional battery pack is electrically connected to the body of the note book personal computer will be explained with reference to FIG. 1.

FIG. 1 shows a portion of the circuit configuration of interface of a note book personal computer 1000 and a battery pack 1002.

the note book personal computer 1000 and the battery pack 1002 are detachably connected by a connecting portion 1003. A battery plus terminal (Batt + terminal) 1003a and a battery minus terminal (Batt - terminal) 1003e are connecting portions for power supply of the note book personal computer 1000 and the battery pack 1002. The note book personal computer 1000 can collect respective information of the battery pack 1002 such as charge/discharge current, battery voltage and capacity, etc. through communication line from the battery pack 1002.

In FIG. 1, there is shown communication system of the two wire type of data line and clock line, and data line and clock line of the note book personal computer 1000 and the battery pack 1002 are respectively connected by a data terminal 1003b and a clock terminal 1003c. A B-IN terminal 1003d is connecting portion of a detection line 1002e relating to the loading state to the note book personal computer 1000 body of the battery pack 1002.

Reference numeral 1001a indicates a 5V power supply line of the note book personal computer 1000, reference numeral 1001f indicates a communication LSI (Large Scale Integrated Circuit) of the note book personal computer 1000, reference numeral 1001b indicates a pull-up resistor Rn1 (e.g., 4.7 kΩ) of data line, and reference numeral 1001c indicates a pull-up resistor Rn2 (e.g., 4.7 kΩ) of clock line. Reference numeral 1001d indicates a pull-down resistor Rn3 (e.g.,10 ΩQ) for allowing the loading state detection line 1002e of the battery pack 1002 to be at L level.

Reference numeral 1002a indicates a 5V power supply line of the battery pack 1002, and reference numeral 1002f indicates a CPU (Central Processing Unit) for charge/discharge control of the battery pack 1002, communication with the note book personal computer 1000 and various calculations. Reference numeral 1002d indicates a pull-up resistor Rp3 (e.g., 1 MΩ) of the loading state detection line of the battery pack 1002.

Let consider the case where AC adapter (A.C. current adapter) is not connected to the note book personal computer 1000 and the 5V power supply line 1001a of the note book personal computer 1000 has high impedance. Before loading of the battery pack 1002 is not detected, the CPU 1002f of the battery pack 1002 does not deliver power to the note book personal computer 1000. When the battery pack 1002 is loaded, signal level of the loading state detection line 1002e of the battery pack 1002 shifts from H level to L level by a resistor (Rn3) 1001d of the note book personal computer 1000, and the CPU 1002f thus detects loading of the battery pack 1002. When such loading is detected, the battery pack 1002 delivers power to the note book personal computer 1000.

In the case where the battery pack 1002 is taken out from the note book personal computer 1000 in a manner opposite to the above, the loading state detection line 1002e is cut offfrom the pull-down resistor (Rn3) 1001 d, and its signal level shifts from L level to H level by the pull-up resistor (Rp3) 1002d.

In the case where, for the purpose of reducing current consumption, the battery pack 1002 is not loaded into the note book personal computer 1000, or in the case where the note book personal computer 1000 is in sleep state even if it is loaded, power supply to a portion of the circuit within the battery pack 1002 is interrupted to reduce current consumption.

As difference of charge/discharge operation of the battery pack 1002 by loading state, when it is not loaded, the battery pack 1002 inhibits charge/discharge operation, but when it is loaded, it permits charge/discharge operation if the battery pack 1002 is in normal state.

Detection that the note book personal computer 1000 is in sleep state during loading is carried out by allowing the CPU 1002f of the battery pack 1002 to detect that signal level of the communication line is not changed for a predetermined time or more.

The battery pack 1002 serves to apply latch of overcurrent protection so that charge/discharge operation is unable. However, in the case where overcurrent is detected, latch of overcurrent protection is released when the battery pack 1002 is taken out from the note book personal computer 1000.

Further, the loaded battery pack 1002 does not deliver power to the note book personal computer 1000 until it recognizes that the battery pack 1002 has been loaded (chargeable/dischargeable state). In addition, in the case where the battery pack 1002 is taken out, it does not inhibit charge/discharge operation until it recognizes that it is taken out except for extraordinary state such as overcurrent, overdischarge or overcharge, etc.

For the above reasons, the function to detect electrical loading state with respect to the connecting portion 1003 of the battery pack 1002 is important.

Meanwhile, as shown in FIG. 1, the connecting portion 1003 between the note book personal computer 1000 and the battery pack 1002 requires five terminals in total of battery plus terminal 1003a, data terminal 1003b, clock terminal 1003c, B-IN terminal 1003d and battery minus terminal 1003e. Accordingly, in the case where the battery pack 1002 is connected by the connecting portion 1003 with respect to the note book personal computer 1000, unless these five terminals are electrically securely connected, it is impossible to well deliver power with respect to the note book personal computer 1000 from the battery pack 1002.

If the number of these terminals of the connecting portion 1003 can be reduced, particularly if the B-IN terminal 1003d can be eliminated, the number of output terminals at the connecting portion 1003 is reduced. Thus, the battery pack 1002 can be more reliably electrically connected with respect to the note book personal computer 1000, and miniaturization of the connecting portion can be realized and there can result less unsatisfactory terminal contact.

From US 5,625,237 a power source device is known, which may use both an external DC power source and a battery contained therein. A circuit is provided to measure the battery voltage, to calculate the remaining capacity of the battery and to indicate the remaining capacity. A mounting status detecting means is provided in order to detect whether the battery is mounted in the power source device. This status information is used for short circuiting the input side of the battery voltage measuring circuit so that a voltage leaking from an external DC power source may not erroneously measured as a battery voltage.

JP 8019184 discloses a power-supply device and a display method of the completion of its mounting. An apparatus into which a battery pack shall be mounted compares the voltage read out from the battery pack with a voltage of a reference battery. In consequence. LEDs are respectively lit in order to indicate the mounting status of the battery pack and the residual amount of the battery power.

Disclosure of the Invention

This invention has been made in view of the above-described problems, and its object is to provide a battery pack, an electronic equipment system and a method of detecting loading of battery pack such that the number of connecting terminals used in electrically connecting the battery pack with respect to the electronic equipment is reduced so that miniaturization can be realized and there can result less unsatisfactory terminal contact. The invention is defined by the technical features recited in claim 1 and claim 9.

In order to solve problems as described above, this invention is directed to the configuration in which the battery pack is detachably loaded through electric connecting portion to thereby deliver power, wherein the battery pack detects, by using communication line composed of a data line and a clock line for carrying out transmission/reception of information between the battery pack and the electronic equipment, whether the battery pack is in the state electrically connected to the connecting portion of the electronic equipment or the battery pack is in the state electrically detached from the connecting portion of the electronic equipment.

In this invention, the communication line for informing information between the battery pack and the electronic equipment is utilized. Namely, the battery pack can detect, on the basis of state of signal of this communication line, whether the battery pack is in the state electrically connected to the connecting portion of the electronic equipment or the battery pack is in the state electrically detached from the connecting portion of the electronic equipment.

In more practical sense, as the communication line, there are mentioned a data line for carrying out transmission/reception of data between The battery pack and the electronic equipment and a clock line supplied with clock from the electronic equipment. In this case, it is possible to detect, on the basis of change of signal level of the clock line at the time of a first state where the electronic equipment is supplied with power and communication is not carried out between the battery pack and the electronic equipment, change of signal level of the data line or the clock line at the time of a second state where the electronic equipment is supplied with power and communication is being carried out between the battery pack and the electronic equipment and change of signal level of the data line or the clock line at the time of a third state where the electronic equipment is not supplied with power, whether the battery pack is in the state electrically connected to the connecting portion of the electronic equipment or in the state electrically detached from the connecting portion of the electronic equipment.

Thus, the number of terminals for detection of loading of the battery pack which were required separately in the prior art can be reduced. Accordingly, miniaturization can be realized and there can result less unsatisfactory contact of terminal.

Brief Description of the Drawings

FIG. 1 is a view showing an example of a conventional electronic equipment.
FIG. 2 is a perspective view showing an example applied to note book personal computer as an embodiment of battery pack and electronic equipment of this invention.
FIG. 3 is a view showing a connection example of battery pack and its electric connecting portion in the note book personal computer of FIG. 2.
FIG. 4 is a view showing another embodiment of this invention.
FIG. 5 is a view showing a further embodiment of this invention.

Best Mode for Carrying Out the Invention

Preferred embodiments of this invention will now be described in detail in accordance with the attached drawings.
Since the embodiments described below are preferred more practical example of this invention, technically preferred various limitations are attached. However, the range of this invention is not limited to these forms as long as there is no description to the effect that this invention is particularly limited in the following explanation.

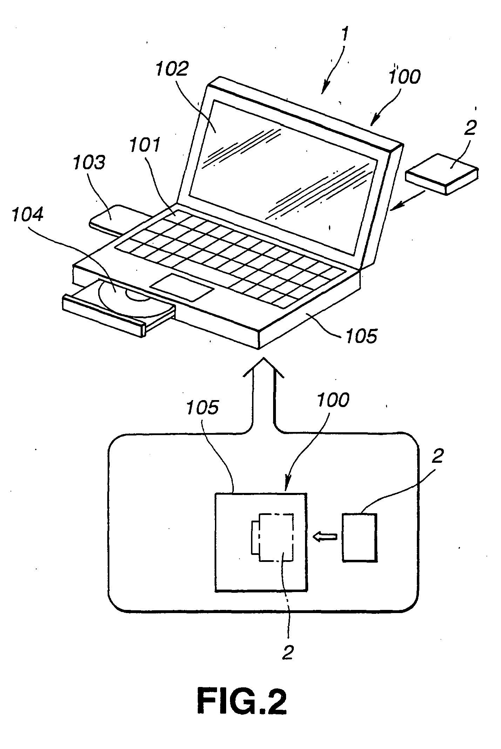

FIG. 2 shows, as the embodiment of this invention, an example in which this invention is applied to a note book type personal computer 1 and a battery pack 2. A body 105 of this note book personal computer 1 includes a key board 101, a display 102, a slot 103 of card, and a drive 104 for CD-ROM (Read Only Memory utilizing compact disc), etc.
The battery 2 is detachably loaded into the body 105 through the electric connecting portion 3 so that it can be electrically connected thereto. This battery pack 2 serves to deliver power for operation to the note book personal computer 1 and is called battery package. As kind of the battery, e.g., secondary battery, lithium ion secondary battery when an example is taken may be used.
It is to be noted that, as the battery pack 2, secondary battery and other kind of battery, e.g., lithium ion secondary battery, lead storage battery (so called battery of automotive vehicle), Ni-Cd battery (Nickel-Cadmium battery), Ni-hydrogen battery (Nickel-hydrogen battery), Ni-Zn battery (Nickel Zinc storage battery), polymer battery, Zn-air battery (Zinc-air battery), etc. may be employed.

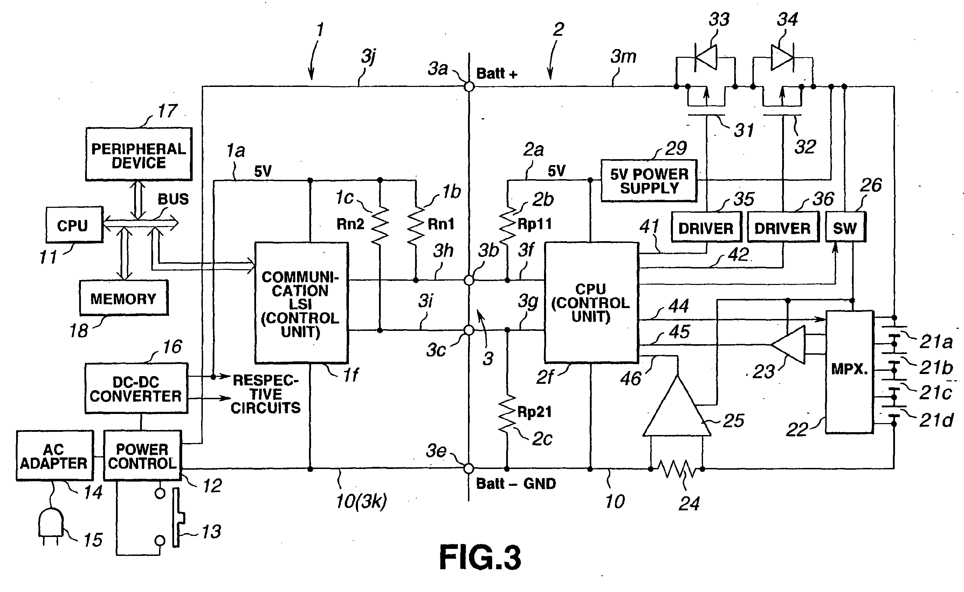

FIG. 3 shows the state where the battery pack 2 is connected to the note book personal computer 1 through the connecting portion 3 in the embodiment of this invention.
The note book personal computer 1 shown in FIG. 3 is the system in which only one AC adapter (A.C. power adapter) or the battery pack 2 can be loaded.
The note book personal computer 1 includes a communication LSI (called communication control unit as occasion may demand (Large Scale Integrated Circuit)) 1f, and two pull-up resistors of a pull-up resistor (Rn1) 1b and a pull-up resistor (Rn2) 1c, etc. The communication LSI 1f is connected between, e.g., a power supply line 1a of 5V and a ground line (GND) 10, and respective one end sides of the communication LSI 1f and the two pull-up resistors (Rn1) 1b and (Rn2) 1c are connected to the power supply line 1a of 5V.
The other end of the pull-up resistor (Rn1) 1b is connected to a data line 3h of the communication LSI 1f, and the other end of the pull-up resistor (Rn2) 1c is connected to a clock line 3i of the communication LSI 1f. The data line 3h and the clock line 3i are respectively connected to a data terminal 3b and a clock terminal 3c of the connecting portion 3a. Battery lines 3j, 3k of the note book personal computer 1 side are respectively connected to battery plus terminal (Batt + terminal) 3a and battery minus terminal (Batt - terminal) 3e. In this example, the battery line 3k connected to the battery minus terminal (Batt - terminal) 3e serves as the ground line (GND) 10.
Moreover, at the note book personal computer 1, various peripheral device 17, and memory 18 such as ROM (Read Only Memory) and RAM (Random Access Memory), etc. are connected to bus line BUS of the main CPU (Central Processing Unit), and the communication LSI 1f is connected to this bus line BUS. A power switch 13 is provided at a power control circuit 12 so that power ON/OFF control is carried out, and is supplied with commercial A.C. power from a power supply plug 15 through an AC adapter 14 so that power from the battery pack 2 is delivered through the battery lines 3j, 3k. In addition, charge current supply to the battery pack 2 is carried out through the battery lines 3j, 3k.

On one hand, the battery pack 2 includes a CPU (Central Processing Unit) 2f serving as control unit, a single pull-up resistor (Rp11) 2b, and a pull-down resistor (Rp21) 2c. Respective one end sides of the CPU 2f and the pull-up resistor 2b are connected to a power supply line 2a of 5V. A data line 3f and a clock line 3g of the CPU 2f can be respectively connected to the data terminal 3b and the clock terminal 3c of the connecting portion 3a. The data line 3f is connected to the other end of the pull-up resistor 2b, the clock line 3g is connected to one end of the pull-down resistor 2c, and the other end of the pull-down resistor 2c is connected to the ground line 10.

Moreover, a battery cell group composed of, e.g., four battery cells 21a, 21b, 21c and 21 d connected in series is accommodated within the battery pack 2. The plus side of this battery cell group is connected to the battery plus terminal (Batt + terminal) 3a for external connection through switching element, and the minus side thereof is connected to ,the battery minus terminal (Batt - terminal) 3e for external connection. In order to measure voltages of respective battery cells 21a, 21b, 21c, 21d of the group of battery cells, there are provided a multiplexer (MPX) 22 and an operational amplifier 23. When a battery cell select control signal from the CPU (control unit) 2f is sent to the multiplexer 22 through a control line 44, the multiplexer 22 selects any one of the four battery cells 21a, 21b, 21c, 21d to send its terminal voltage to the operational amplifier 23. Output from this operational amplifier 23 is sent to the CPU 2f through a voltage measurement signal line 45, and is caused to undergo A/D (Analog/Digital) conversion within the CPU 2f. Thus, battery cell terminal voltage is taken thereinto as digital value. A resistor 24 for current measurement is inserted and connected at, e.g., the minus side of the battery cell group. A voltage corresponding to current value flowing in this resistor 24 is detected by an operational amplifier 25, and is sent to the CPU 2f through a current measurement signal line 46. The voltage thus obtained is caused to undergo A/D (Analog/Digital) conversion within the CPU 2f, and current value thus measured is taken as digital value. The multiplexer 22 and the operational amplifiers 23, 25 are supplied with power through a power saving switch 26 from the plus side of the battery cell group. This switch 26 is subjected to ON/OFF control by power saving control signal delivered through a power saving control line 43 from the CPU 2f. Moreover, a regulator circuit 29 for 5V power supply is connected to the plus side of the battery cell group, and output from the 5V power regulator circuit 29 is delivered to power supply line 2a of 5V.

Further, a FET 31 serving as switching element for Charge and a FET 32 serving as switching element for Discharge are inserted and connected in series between battery plus terminal (Batt + terminal) 3a of the battery pack 2 and the plus side of the battery cell group, and diodes 33, 34 are respectively connected in parallel with these FETs 31, 32. The FET 31 for charge is caused to undergo ON/OFF control by a driver 35. This driver 35 is driven by control signal delivered through a charge control line 41 from the CPU 2f. On the other hand, the discharge FET 32 is caused to undergo ON/OFF control by a driver 36, and this driver 36 is driven by control signal delivered through a discharge control line 42 from the CPU 2f.

In FIG. 3, impedance of the 5V power supply line 1a is caused to be high impedance, data line 3f of the battery pack 2 is pulled up by pull-up resistor 2b (e.g., 1MΩ) so that there results potential on 5V power supply line 2a of the battery pack 2, and clock line is pulled down by pull-down resistor 2c (e.g., 10MΩ) so that there results potential on the ground line 10.

Namely, in this example, when example of respective resistor values is taken, pull-up resistor 1b of the note book personal computer 1 is caused to be 4.7 kΩ, pull-up resistor 1c thereof is caused to be 4.7 kΩ, the pull-up resistor 2b of the battery pack 2 is caused to be 1MΩ, and the pull-down resistor 2c is caused to be 10 MΩ.

This note book personal computer 1 is the system adapted so that only one AC adapter or battery pack can be loaded and 5V power supply line 1a has high impedance. In this case, the state where the battery pack 2 is electrically detached from the connecting portion 3 and is operative by power supply from the AC adapter 14 is assumed. In the note book personal computer 1 in such a state, e.g., the body 105 of FIG. 2 is in sleep state and data terminal 3b and clock terminal 3c of the communication LSI 1f are held at 5V of the 5V power supply line 1a of high impedance as described above in the state of communication standby.

Namely, since the data line 3h pulled up by the pull-up resistor 1b and the clock line 3i pulled up by the pull-up resistor 1c are held at 5V, when the battery pack 2 is inserted so that it is electrically connected by the connecting portion 3, signal level of the pulled up data line 3h is not changed in the state remaining at H level (High level), but signal level of the pulled down clock line 3i changes from L level (Low level) to H level. By detecting this level change by the clock terminal 3g of the CPU 2f of the battery pack 2, the battery pack 2 detects insertion state into the note book personal computer 1.

In the note book personal computer 1 in which the battery pack 2 is detached and is operative by the AC adapter 14, in the case where synchronous communication of, e.g., data of 8 bits is carried out at speed (rate) of 9600 bps in the communication operating state, since communication data signals appear on both the data line 3h and the clock line 3i, their signal levels change from H level to L level, or from L level to H level.

In view of the above, when the battery pack 2 is electrically inserted into the connecting portion 3 of the note book personal computer, signal of which level is changed into H/L in accordance with communication data appears on the data line 3h or the clock line 3i. By detecting presence/absence of signal of which level is changed into H/L, it is possible to detect that the battery pack 2 has been loaded into the connecting portion 3. In this case, in the case where attention is paid only to signal level, falling or rising edge when signal level of the data line 3h changes from H level to L level or the clock line 3i changes from L level to H level is detected at data terminal 3f or clock terminal 3g of the CPU 2f of the battery pack 2, thereby making it possible to detect that the battery pack 2 has been electrically inserted into the connecting portion 3.

In the case where both the battery pack 2 and the AC adapter 14 are detached from the note book personal computer 1, 5V power supply line 1a of the note book personal computer 1 is not held at 5V. When the battery pack 2 is inserted into the note book personal computer 1, 5V power supply line 2a and ground line 10 of the battery pack 2 are electrically connected through pull-up resistor 2b, pull-up resistor 1b, pull-up resistor 1c and pull-down resistor 2c. For this reason, voltage level of data line 3f of the battery pack 2 is expressed as follows.

$$(4.7 \text{ k}\Omega + 4.7 \text{ k}\Omega + 10 \text{ M}\Omega) \times 5/(1\text{M}\Omega + 4.7 \text{ k}\Omega + 4.7 \text{ k}\Omega + 10\text{M}\Omega)\text{V}$$

Voltage level of the clock line 3g is expressed as 10 MΩ x 5/(1MΩ + 4.7 kΩ + 4.7KΩ + 10MΩ)V. By insertion of the battery pack 2, signal level of the data line 3f is not changed in the state remaining at H level, and signal level of the clock line 3g changes from L level to H level. Accordingly, this level change is detected by clock terminal 3g of the CPU 2f to thereby detect insertion of the battery pack 2.

When the battery pack 2 is taken out from the note book personal computer 1, since signal level of the data line 3f of the battery pack 2 is pulled up, it is caused to be at H level, and since signal level of the clock line 3g is pulled down, it is caused to be at L level. In view of this, if signal levels of the data line 3f and the clock line 3g of the battery pack 2 are respectively at H level and L level for a predetermined time or more (e.g., 1 sec or more), it is judged that the battery pack 2 has been detached from the note book personal computer 1.

As described above, data line and clock line serving as communication line are used to judge electric insertion or taking-out with respect to the note book personal computer 1 of the battery pack 2, thereby making it possible to reduce the B-IN terminal which was conventionally required serving as detection terminal for insertion or taking-out.

In the configuration of this electronic equipment, it is preferable to carry out detection of electric loading state and non-loading state of the battery pack 2 by change of signal level of data line or clock line in a manner of state classification as described below in more practical sense.

As the initial state at the time of detection of loading state, it is classified into the following three cases.

(1) The case where the note book personal computer 1 is supplied with power from the AC adapter 14 or the battery pack 2, etc. and communication of the note book personal computer 1 is in standby state.
(2) The case where the note book personal computer 1 is supplied with power from the AC adapter 14 or the battery pack 2, etc. and the note book personal computer 1 is in communicating state.
(3) The case where the note book personal computer 1 is not supplied with power from the AC adapter 14 or the battery pack 2, etc.

The above-described respective states (1), (2), (3) will now be explained with reference to the Table 1 and FIG. 3.

Table 1

| | | STATE OF BATTERY PACK | INSERTION (LOADING) | TAKING OUT |
|---|---|---|---|---|
| (A) | | STATE (1) COMMUNICATION STANDBY AT TIME OF POWER SUPPLY | DATA LINE: H → H → H | |
| | | | CLOCK LINE: L → H → L | |
| (B) | | STATE (2) POWER SUPPLY COMMUNICATING STATE | DATA LINE: H → H/L → H | |
| | | | CLOCK LINE: L → H/L → L | |
| (C) | | STATE (3) NO POWER SUPPLY | DATA LINE: H → H → H | |
| | | | CLOCK LINE: L → H → L | |

State (1)

Since the note book personal computer 1 is already supplied with power from battery pack 2 as indicated by (A) of the Table 1, the 5V power supply line 1a is held at 5V. For this reason, at the time of communication standby, in the case where both signal levels of the data line 3f and the clock line 3g are at H level (5V), when the battery pack 2 is electrically inserted into the connecting portion 3, signal level of the data line 3f is not changed in the state remaining at H level, but signal level of the clock line 3g changes from L level to H level. If this change is detected, the CPU 2f of the battery pack 2 judges that the battery pack 2 has been electrically inserted.

In the case where the battery pack 2 is taken out from the note book personal computer 1 in a manner opposite to the above, signal levels of the data line 3f and the clock line 3g of the battery pack 2 are respectively at H level and L level. Accordingly, when it is detected that signal level of the data line 3f is at H level and signal level of the clock line 3g is at L level for a predetermined time or more, the battery pack 2 judges that it is taken out.

State (2)

In the case where the note book personal computer 1 is communicating as indicated by (B) of the Table 1, signal levels of data line 3h and clock line 3i of the note book personal computer 1 momentarily change from L level to H level and from H level to L level (indicated by H/L in the Table). Accordingly, if, when the battery pack 2 is inserted, signal level of data line 3f of the battery pack 2 changes from H level to L level and signal level of the clock line 3g changes from L level to H level, the CPU 2f of the battery pack 2 judges by this change that the battery pack 2 has been inserted.

In the case where the battery pack 2 is taken out from the note book personal computer 1 in a manner opposite to the above, signal levels of the data line 3f and the clock line 3g of the battery pack 2 are respectively caused to be at H level and L level. Accordingly, if signal level of the data line is at H level and signal level of the clock line is at L level for a predetermined time or more, the CPU 2f of the battery pack 2 judges that the battery pack 2 has been taken out.

State (3)

When the battery pack 2 is inserted into the note book personal computer 1 as indicated by (C) of the Table 1, the 5V power supply line 1a and the ground line 10 are connected through pull-up resistor 2b, pull-up resistor 1b, pull-up resistor 1c, and pull-down resistor 2c. If the pull-up resistor 2b is selected so that its resistance value is sufficiently larger than that of the pull-up resistor 1b and the pull-up resistor 1c and the pull-down resistor 2c is selected so that its resistance value is equal to 10 times larger than that of the pull-up resistor 2b, signal levels of the data line 3f and the clock line 3g are caused to be at H level. In this case, signal level of the data line 3f is not changed in the state remaining at H level, but signal level of the clock line 3g changes from L level to H level. For this reason, insertion of the battery pack 2 can be judged.

In the case where the battery pack 2 is taken out from the note book personal computer 1 in a manner opposite to the above, signal levels of data line 3f and clock line 3g of the battery pack 2 are respectively caused to be at H level and L level. Accordingly, if it is detected that signal level of data line 3f is at H level and signal level of the clock line 3g is at L level for a predetermined time or more, the CPU 2f of the battery pack 2 judges that the battery pack 2 has been taken out.

Another embodiment of the electronic equipment of this invention will now be described with reference to FIG. 3.

In FIG. 3, impedance of 5V power supply line 1a of the note book personal computer 1 is caused to be high impedance, data line 3h of the battery pack 2 is pulled up by pull-up resistor (Rp11) (e.g., 1MΩ)2b so that potential of 5V power supply line 2a is provided, and the clock line 3g is pulled down by pull-down resistor (Rp21) (e.g., 100 kΩ) 2c so that potential of ground line 10 is provided.

Resistance value (e.g., 100 kΩ) of this pull-down resistor (Rp21) 2c is value lower as compared to the resistance value (e.g., 10 MΩ) of pull-down resistor Rp21 in the above-described embodiment, and is value which is about one/tenth greater than the resistance value (e.g., 1 MΩ) of the pull-up resistor (Rp11) 2b of the data line 3h. In the state where battery pack 2 is inserted into the note book personal computer 1, impedance of 5V power supply line 1a is caused to correspond to low impedance.

In this configuration, by change of signal level of data line or clock line, the battery pack 2 carries out detection of loading states (1), (2), (3) as indicated by the following Table 2.

Table 2

| | | STATE OF BATTERY PACK | INSERTION (LOADING) | TAKING OUT |
|---|---|---|---|---|
| (A) | | STATE (1) COMMUNICATION STANDBY AT TIME OF POWER SUPPLY | DATA LINE: H → H → H | |
| | | | CLOCK LINE: L → H → L | |
| (B) | | STATE (2) POWER SUPPLY COMMUNICATING STATE | DATA LINE: H → H/L → H | |
| | | | CLOCK LINE: L → H/L → L | |

(continued)

|  | STATE OF BATTERY PACK | INSERTION (LOADING) | TAKING OUT |
|---|---|---|---|
| (C) | STATE (3) NO POWER SUPPLY | DATA LINE: H → L → H | |
|  |  | CLOCK LINE: L → L → L | |

State (1)

This state is the same as the state (1) of (A) of the Table 1.

State (2)

This state is the same as the state (2) of (B) of the Table 1.

State (3)

When the battery pack 2 of FIG. 3 is inserted into the note book personal computer 1 as indicated by (C) of the Table 1, the 5V power supply line 1a and the ground line 10 are connected through pull-up resistor 2b, pull-up resistor 1b, pull-up resistor 1c, and pull-down resistor 2c. The pull-up resistor 2b is selected so that its resistance value is sufficiently greater than that of the pull-up resistor 1b and the pull-up resistor 1c, and the pull-down resistor 2c is selected so that its resistance value is a value about 1/10 times greater than that of the pull-up resistor 2b. For this reason, signal levels of the data line 3f and the clock line 3g are caused to be at L level. Signal level of the clock line 3g is not changed in the state retaining at L level. However, since signal level of the data line changes from H to L, insertion of the battery pack 2 can be judged by this change.

In the case where the battery pack 2 is taken out from the note book personal computer 1 in a manner opposite to the above, signal levels of data line 3f and clock line 3g of the battery pack 2 are respectively caused to be at H level and L level. Accordingly, if it is detected that signal level of data line 3f is at H level and signal level of clock line 3g is at L level for a predetermined time or more, the CPU 2f of the battery pack 2 judges that the battery pack 2 has been taken out.

Moreover, by also employing, in place of the configuration of FIG. 3, an approach in which impedance of 5V power supply line of the note book personal computer is caused to be low impedance (e.g., resistor of 100 kΩ is inserted between 5V power supply line and ground line), and impedance of pull-down resistor Rp21 of clock line of the battery pack is caused to be value about 10 times greater than that of the pull-up resistor Rp 11 of data line, it is possible to detect loading state by similar operation.

In this case, in the above-described embodiment shown in FIG. 3, data line 3f of CPU 2f of battery pack 2 is connected to 5V power supply line 2a through pull-up resistor (Rp11) 2b, and clock line 3g is connected to ground line (GND) 10 through pull-down resistor (Rp21). In a manner opposite to the above, namely, data line 3f may be connected to ground line through pull-down resistor, and clock line 3g may be connected to 5V power supply line through pull-up resistor. In this case, loading detection of the battery pack can be similarly carried out except that the signal state of data line in the Table 1 and the Table 2 and the signal state of clock line are opposite to each other.

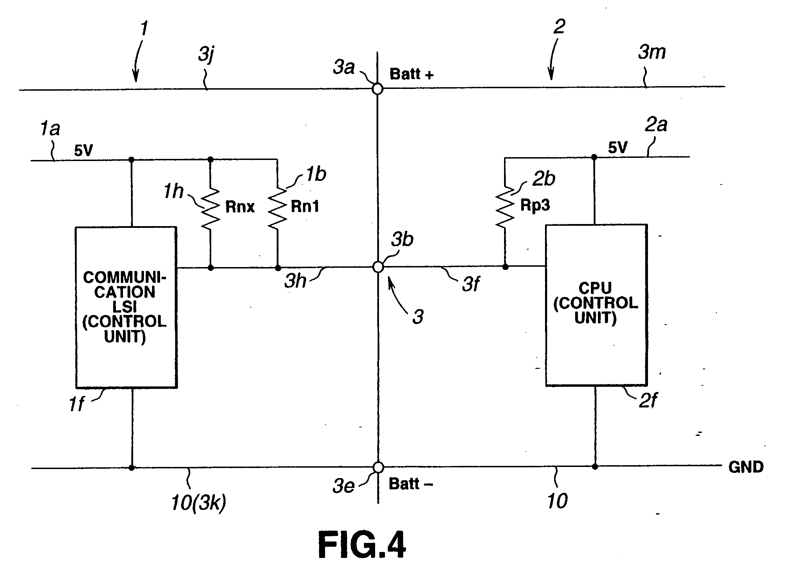

A further embodiment of the electronic equipment of this invention will now be described with reference to FIG. 4 and the Table 3.

In FIG. 4, the note book personal computer 1 includes resistor (Rnx) 1h, pull-up resistor (Rn1) 1b, and LSI 1f for communication, etc. Respective one end sides of the communication LSI 1f, the resistor 1h and the pull-up resistor 1b are connected to 5V power supply line 1a, and the other end sides of resistor 1h and communication LSI 1f are connected to the ground line 10 (called battery line 3k as occasion may demand). The other end of the pull-up resistor 1b is connected to data line 3h of communication LSI 1f, and this data line 3h is connected to data terminal 3b. The battery line 3j is connected to the battery terminal 3a, and the ground line 10 (battery line 3k) is connected to the battery terminal 3e.

The connecting portion 3 has only three terminals in total of battery terminals 3a, 3e and data terminal 3b.

On the other hand, the battery pack 2 includes pull-up resistor (Rp11) 2b and CPU 2f, and 5V power supply line 2a is connected to one end portion of the pull-up resistor 2b and one end portion of the CPU 2f. The other end of the pull-up resistor 2b is connected to the data line 3f of the CPU 2f. The other end of the CPU 2f is connected to the ground line 10.

As stated above, in the embodiment of the electronic equipment of FIG. 4, the connecting portion 3 includes three terminals 3a to 3e, and the communication LSI 1f and the CPU 2f include only data lines 3h, 3f and have not clock line. Namely, the electronic equipment of FIG. 4 employs the so-called one wire type communication system, but is different in that the embodiment of FIG. 3 employs so-called two-wire type communication system having data line and clock line.

In FIG. 4, resistor Rnx (e.g., 100 kΩ) is inserted between the 5V power supply line 1a and the ground line 10 to allow impedance of 5V power supply line 1a of the note book personal computer 1 to be low impedance, and to pull-up data line 3f of the battery pack 2 by the pull-up resistor (e.g., 1 MΩ) 2b so that potential of the 5V power supply line 2a is provided.

In the configuration shown in FIG. 4, the battery pack 2 carries out detection of loading state by change of signal level of data line 3f in a manner as shown in the Table 3.

Table 3

|  |  | STATE OF BATTERY PACK | INSERTION (LOADING) | TAKING OUT |
|---|---|---|---|---|
| (A) | | STATE (1) COMMUNICATION STANDBY AT TIME OF POWER SUPPLY | DATA LINE: H → L → H | |
| (B) | | STATE (2) POWER SUPPLY COMMUNICATING STATE | DATA LINE: H → H/L → H | |
| (C) | | STATE (3) NO POWER SUPPLY | DATA LINE: H → L → H | |

State (1)

The state at the time of the communication standby of the note book personal computer 1 is assumed to be at L level as indicated by (A) of the Table 3. Thus, when the battery pack 2 is inserted into the note book personal computer 1, signal level of data line 3f of battery pack 2 changes from H level to L level. In this case, by this change, the CPU 2f of the battery pack 2 judges that the battery pack 2 has been inserted.

In the case where the battery pack 2 is taken out from the note book personal computer 1 in a manner opposite to the above, signal level of data line 3f of battery pack 2 is caused to be at H level. Accordingly, if the CPU 2f of the battery pack 2 detects that signal level of the data line 3f is caused to be at H level for a predetermined time or more, it judges that the battery pack 2 has been taken out.

State (2)

In the case where the note book personal computer 1 is communicating as indicated by (B) of the Table 3, signal level of that data line 3f changes (H/L) from H level to L level, or from L level to H level. For this reason, when the battery pack 2 is inserted, there are instances where signal level of data line 3f of battery pack 2 changes from H level to L level. The CPU 2f detects this change to thereby detect that the battery pack 2 has been inserted.

In the case where the battery pack 2 is taken out from the note book personal computer 1 in a manner opposite to the above, signal level of data line 3f of battery pack 2 is caused to be at H level. Accordingly, if it is detected that signal level of data line 3f is caused to be at H level for a predetermined time or more, the battery pack judges that it has been taken out.

State (3)

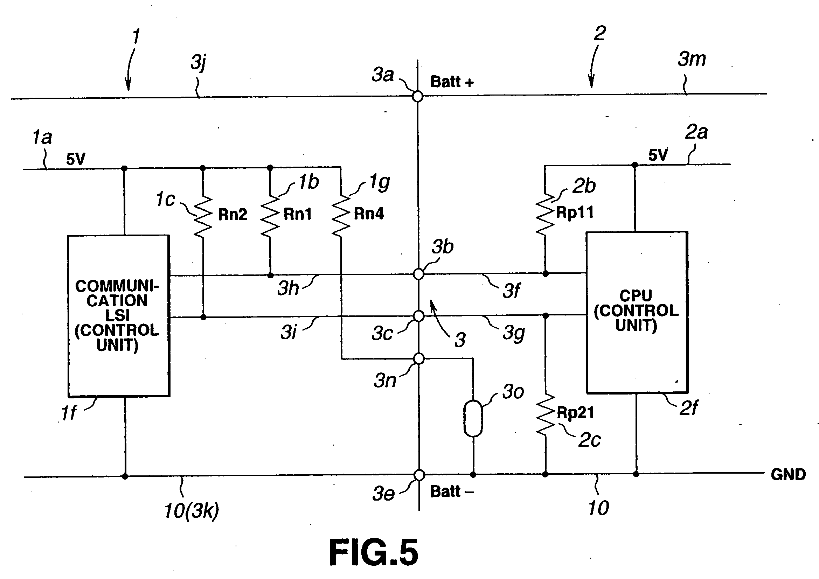

When the battery pack 2 is inserted into the note book personal computer 1 as indicated by (C) of FIG. 3, 5V power supply line 2a and ground line 10 of the battery pack 2 are connected by pull-up resistor 2b and resistor Rnx. For this reason, when the pull-up resistor 2b is selected so that its resistance value is sufficiently greater than that of the resistor Rnx, signal level of data line 3f changes from H level to L level as the result of the fact that the battery pack 2 is inserted. By this change, the CPU 2f of the battery pack 2 can judge that the battery pack 2 has been inserted.

In accordance with the embodiment of this invention, it becomes possible to detect electric insertion and taking-out with respect to the note book personal computer 1 of the battery pack 2 by the communication line. As a result, the necessity of providing dedicated terminal for detecting loading state conventionally required is eliminated. Thus, the number of terminals can be reduced, and miniaturization of connector can be realized and there can result less unsatisfactory contact.

It is to be noted that, similarly to the prior art, the battery pack 2 detects loading state to thereby control power supply from the battery pack 2 to the note book personal computer 1, or to carry out charge/discharge control.

Namely, in the case where, for the purpose of reducing current consumption, the battery pack 2 is not loaded into the note book personal computer 1 or the note book personal computer 1 is in sleep state even if loaded, power supply to a portion of the circuit within the battery pack 2 is interrupted to reduce current consumption.

As difference of charge/discharge operation of the battery pack 2 by loading state, when the battery pack 2 is not loaded, it inhibits charge/discharge operation, but when the battery pack 2 is loaded, if the battery pack 2 is in normal state, charge/discharge operation can be made.

Detection that the note book personal computer 1 is in sleep state during loading is carried out by allowing the CPU 2f of the battery pack 2 to detect that signal level of the communication line is not changed for a predetermined time or more.

The battery pack 2 applies latch of overcurrent protection so that charge/discharge operation cannot be made, whereby in the case where overcurrent is detected, latch of overcurrent protection is released when it is taken out from the note book personal computer 1.

Further, the loaded battery pack 2 does not supply power to the note book personal computer 1 until the battery pack 2 is loaded (chargeable/dischargeable state). In addition, in the case where the battery pack 2 is taken out, charge/discharge operation is not inhibited until the battery pack 2 recognizes that it has been taken out except for the extraordinary state such as overcurrent, overdischarge or overcharge, etc.

Control of such charge/discharge operation is carried out by allowing the CPU 2f of the battery pack 2 of FIG. 3 to carry out ON/OFF control of FETs 31, 32 through control lines 41, 42 and through drivers 35, 36. In addition, in the case where power supply from the battery pack 2 to the note book personal computer 1 is not carried out, the CPU 2f sends a power saving control signal to switch 26 through control line 43 to cut OFF power supply to multiplexer 22 and operational amplifiers 23,25 to thereby carry out a control such that there results the power saving state.

A further embodiment of the electronic equipment of this invention will now be described with reference to FIG. 5.

The embodiment of FIG. 5 is substantially similar to the embodiment of FIG. 3, but a thermistor 30 for temperature compensation is disposed in addition to the embodiment of FIG. 3. This thermistor 30 is disposed between 5V power supply line 1a and the ground line 10 of the note book personal computer 1 through resistor 1g and terminal 3n.

In the configuration of FIG. 3, in the case where the pull-down resistor (Rp21) 2c is, e.g., pull-down resistor of the embodiment having relatively low impedance of about 100 kΩ, signal level is dropped with respect to the ground 10 through clock line 3i, clock line 3g and pull-down resistor (Rp21) 2c from data line 3h of communication LSI 1f, whereby signal level of data terminal 3b changes from H level to L level.

On the contrary, in the embodiment of FIG. 5, the data line 3f is pulled down with respect to ground 10 through resistor (Rn3) 1g, terminal 3n and thermistor 30. Thus, when the battery pack 2 is loaded into the note book personal computer 1, signal level of power supply line 1a changes from H level to L level. For this reason, the CPU 2f of the battery pack 2 detects change of signal level (change from H level to L level) of data line 3f, thereby making it possible to detect that the battery pack 2 has been inserted into the note book personal computer 1.

As explained above, in accordance with the embodiment of this invention, the number of connection terminals used in electrically connecting the battery pack with respect to the electronic equipment is reduced. Thus, it is possible to realize miniaturization and avoid unsatisfactory terminal contact.

Namely, in the embodiments of this invention, B-IN terminal which was conventionally required can be reduced, and miniaturization of the connector by reduction in the number of terminals can be realized and there can result unsatisfactory contact of the terminal.

Meanwhile, this invention is not limited to the above-mentioned embodiments.

While the example of the so-called note book personal computer is mentioned as electronic equipment in the above-described embodiments, this invention is not limited to such implementation. This invention is not limited to the note book personal computer, but if equipment to be applied is equipment for which supply of power is required by the battery pack, this invention can be applied to other kind of computers, information terminal, sound recorder, video tape recorder, pocket telephone, electric bicycle and equipments for which the battery pack is required as already described.

## Claims

1. An electronic equipment system including a battery pack (2) and an electronic equipment in which the battery pack (2) is detachably loaded through an electric connecting portion (3) so that power supply from the battery pack (2) is carried out,

   wherein the battery pack (2) is adapted for detecting, by use of a communication line for transmission/reception of information between the battery pack (2) and the electronic equipment, whether the battery pack (2) is in a state electrically connected to the connecting portion (3) of the electronic equipment or in a state electrically detached from the connecting portion (3) of the electronic equipment, the system being **characterized in that**

   the communication line is composed of a data line (3h) disposed between the battery pack (2) and the electronic equipment and adapted for carrying out transmission/reception of data, and a clock line (3i) disposed between the battery pack (2) and the electronic equipment and supplied with clock therethrough, and the battery pack (2) is adapted for detecting, on the basis of combination of states of signals on the data line (3h) and the clock line (3i), whether the battery pack (2) is in the state electrically connected to the connecting portion (3) of the electronic equipment or in the state electrically detached from the connecting portion (3) of the electronic equipment.

2. An electronic equipment system as set forth in claim 1, wherein the battery pack (2) detects, in dependency upon presence or absence of a signal on the data line (3h) or the clock line (3i) when power is supplied from the battery pack (2) to the electronic equipment as the initial state in electrically connecting the battery pack (2) to the electronic equipment and communication is being carried out between the battery pack (2) and the electronic equipment, whether the battery pack (2) is in the state electrically connected to the connecting portion (3) of the electronic equipment or in the state electrically taken out from the connecting portion (3) of the electronic equipment.

3. An electronic equipment system as set forth in claim 1, wherein the battery pack (2) detects, on the basis of change of signal level of the clock line (3i) or the data line (3h) at the time of a first state where the data line (3h) and the clock line (3i) of the electronic equipment are pulled up to a power supply line placed in the state of high impedance, power is supplied from the battery pack (2) to the electronic equipment as the initial state in electrically connecting the battery pack (2) to the electronic equipment and communication is not carried out between the battery pack (2) and the electronic equipment, presence or absence of a signal on the data line (3h) or the clock line (3i) at the time of a second state where power is supplied from the battery pack (2) to the electronic equipment and communication is being carried out between the battery pack (2) and the electronic equipment, and change of signal level of the clock line (3i) or the data line (3h) at the time of a third state where power is not supplied from the battery pack (2) to the electronic equipment, whether the battery pack (2) is in the state electrically connected to the connecting portion (3) of the electronic equipment or in the state electrically detached from the connecting portion (3) of the electronic equipment.

4. An electronic equipment system as set forth in claim 1. wherein the battery pack (2) detects, on the basis of change of signal level of the clock line (3i) or the data line (3h) at the time of a first state where the data line (3h) and the clock line (3i) of the electronic equipment are pulled up to a power supply line placed in the state of low impedance, and power is supplied from the battery pack (2) to the electronic equipment as the initial state in electrically connecting the battery pack (2) to the electronic equipment and communication is not carried out between the battery pack (2) and the electronic equipment, presence or absence of a signal on the data line (3h) or the clock line (3i) at the time of a second state where power is supplied from the battery pack (2) to the electronic equipment and communication is being carried out between the battery pack (2) and the electronic equipment, and change of signal level of the data line (3h) or the clock line (3i) at the time of a third state where power is not supplied from the battery pack (2) to the electronic equipment, whether the battery pack (2) is in the state electrically connected to the connecting portion (3) of the electronic equipment or in the state electrically detached from the connecting portion (3) of the electronic equipment.

5. An electronic equipment system as set forth in claim 1, wherein the battery pack (2) detects, on the basis of change of signal level of the clock line (3i) or the data line (3h) at the time of a first state where power supply line connected to the data line (3h) and the clock line (3i) of the electronic equipment is caused to have low impedance at the time of loading of the battery pack (2), and power is supplied from the battery pack (2) to the electronic equipment as the initial state in electrically connecting the battery pack (2) to the electronic equipment and communication is not carried out between the battery pack (2) and the electronic equipment, presence or absence of a signal on the data line (3h) or the clock line (3i) at the time of a second state where power is supplied from the battery pack (2) to the electronic equipment and communication is being carried out between the battery pack (2) and the electronic equipment, and change of signal level of the data line (3h) or the clock line (3i) at the time of a third state where power is not supplied from the battery pack (2) to the electronic equipment, whether the battery pack (2) is in the state electrically connected to the connecting portion (3) of the electronic equipment or in the state electrically detached from the connecting portion (3) of the electronic equipment.

6. An electronic equipment system as set forth in claim 1, wherein the communication line is disposed between the battery pack (2) and the electronic equipment and comprised of a data line (3h) for carrying out transmission/reception of data to detect, on the basis of the state of a signal on the data line (3h), whether the battery pack (2) is in the state electrically connected to the connecting portion (3) of the electronic equipment or in the state electrically detached from the connecting portion (3) of the electronic equipment.

**7.** An electronic equipment system as set forth in claim 6,
wherein the battery pack (2) detects, in accordance with presence or absence of a signal on the data line (3h) when power is supplied from the battery pack (2) to the electronic equipment as the initial state in electrically connecting the battery pack (2) to the electronic equipment and communication is being carried out between the battery pack (2) and the electronic equipment, whether the battery pack (2) is in the state electrically connected to the connecting portion (3) of the electronic equipment or in the state electrically detached from the connecting portion (3) of the electronic equipment.

**8.** An electronic equipment system as set forth in claim 6,
wherein the battery pack (2) detects, on the basis of change of signal level of the data line (3h) at the time of a first state where power is supplied from the battery pack (2) to the electronic equipment as the initial state in electrically connecting the battery pack (2) to the electronic equipment and communication is not carried out between the battery pack (2) and the electronic equipment, presence or absence of a signal on the data line (3h) at the time of a second state where power is supplied from the battery pack (2) to the electronic equipment and communication is being carried out between the battery pack (2) and the electronic equipment, and change of signal level of the data line (3h) at the time of a third state where no power is supplied from the battery pack (2) to the electronic equipment, whether the battery pack (2) is in the state electrically connected to the connecting portion (3) of the electronic equipment or in the state electrically detached from the connecting portion (3) of the electronic equipment.

**9.** A loading detection method for battery pack (2), which is adapted to detachably carry out loading of a battery pack (2) through an electric connecting portion (3) with respect to an electronic equipment to thereby carry out power supply to the electronic equipment,
wherein the battery pack (2) detects, by using a communication line for carrying out transmission/reception of information between the battery pack (2) and the electronic equipment, whether the battery pack (2) is in the state electrically connected to the connecting portion (3) of the electronic equipment, or in the state electrically detached from the connecting portion (3) of the electronic equipment,
wherein the communication line is composed of a data line for carrying out transmission/reception of data between the battery pack (2) and the electronic equipment and a clock line (3i) supplied with clock from the electronic equipment to detect, on the basis of combination of states of signals on the data line and the clock line (3i), whether the battery pack (2) is in the state electrically connected to the connecting portion (3) of the electronic equipment or in the state electrically detached from the connecting portion (3) of the electronic equipment.

**10.** A loading detection method for battery pack (2) as set forth in claim 9,
wherein the communication line is comprised of a data line for carrying out transmission/reception of data between the battery pack (2) and the electronic equipment to detect, on the basis of the state of a signal on the data line, whether the battery pack (2) is in the state electrically connected to the connecting portion (3) of the electronic equipment or in the state electrically detached from the connecting portion (3) of the electronic equipment.

**Patentansprüche**

**1.** Elektronisches Gerät mit Batteriesatz (2) und einer elektronischen Vorrichtung, in welcher der Batteriesatz (2) lösbar durch ein elektrisches Verbindungsmittel (3) eingelassen ist, sodass Energieversorgung durch den Batteriesatz (2) stattfindet,
wobei der Batteriesatz geeignet ist, mit Hilfe einer Kommunikationsleitung zum Senden/Empfangen von Information zwischen dem Batteriesatz (2) und dem elektronischen Gerät zu erkennen, ob der Batteriesatz (2) in einem Zustand ist, in welchem er elektrisch mit dem Verbindungsmittel (3) des elektronischen Geräts verbunden ist, oder in einem Zustand, in welchem er von dem Verbindungsmittel (3) von dem elektronischen Gerät elektrisch getrennt ist, **dadurch gekennzeichnet, dass**
die Kommunikationsleitung eine Datenleitung (3h), welche zwischen dem Batteriesatz (2) und dem elektronischen Gerät angeordnet ist und welche geeignet zum Senden/Empfangen von Daten ist, und eine Taktleitung (3i), welche zwischen dem Batteriesatz (2) und dem elektronischen Gerät angeordnet und durch das elektronische Gerät mit einem Takt beschickt ist, aufweist, und dass der Batteriesatz (2) geeignet ist, auf der Basis einer Kombination von Zuständen von Signalen auf der Datenleitung (3h) und der Taktleitung (3i) zu erkennen, ob der Batteriesatz (2) in dem Zustand ist, in welchem er elektrisch mit dem Verbindungsmittel (3) des elektronischen Geräts verbunden ist, oder in dem Zustand, in welchem er von dem Verbindungsmittel (3) des elektronischen Geräts getrennt ist.

**2.** Elektronisches Gerät nach Anspruch 1,

wobei der Batteriesatz (2) in Abhängigkeit von Gegenwart oder Abwesenheit eines Signals auf der Datenleitung (3h) oder der Taktleitung (3i), wenn Energie vom Batteriesatz (2) zum elektrischen Gerät geliefert wird in einem initialen Zustand des elektrischen Verbindens des Batteriesatzes (2) mit dem elektronischen Gerät und Kommunikation zwischen dem Batteriesatz (2) und dem elektronischen Gerät stattfindet, erkennt, ob der Batteriesatz (2) in dem Zustand ist, in welchem er elektrisch durch das Verbindungsmittel (3) des elektronischen Geräts verbunden ist, oder in dem Zustand, in welchem er elektrisch von dem Verbindungsmittel (3) des elektronischen Geräts getrennt ist.

3. Elektronisches Gerät nach Anspruch 1,
wobei der Batteriesatz (2) auf der Basis einer Änderung eines Signalniveaus der Taktleitung (3i) oder der Datenleitung (3h) zur Zeit eines ersten Zustands, in welchem die Datenleitung (3h) und die Taktleitung (3i) des elektronischen Geräts auf das Niveau einer Energieversorgungsleitung mit hoher Impedanz angehoben werden, Energie von dem Batteriesatz (2) zu dem elektronischen Gerät geliefert wird in einem initialen Zustand des Verbindens des Batteriesatzes (2) mit dem elektronischen Gerät und Kommunikation zwischen dem Batteriesatz (2) und dem elektronischen Gerät nicht stattfindet, auf Basis von Gegenwart oder Abwesenheit eines Signals auf der Datenleitung (3h) oder der Taktleitung (3i) zur Zeit eines zweiten Zustands, in welchem Energie vom Batteriesatz (2) zu dem elektronischen Gerät geliefert wird und Kommunikation zwischen dem Batteriesatz (2) und dem elektronischen Gerät stattfindet, und auf Basis einer Änderung eines Signalniveaus der Taktleitung (3i) oder der Datenleitung (3h) zur Zeit eines dritten Zustandes, indem Energie nicht von dem Batteriesatz (2) zu dem elektrischen Gerät geliefert wird, erkennt, ob der Batteriesatz (2) in dem Zustand ist, in welchem er elektronisch mit dem Verbindungsmittel (3) des elektronischen Geräts verbunden ist, oder in dem Zustand, in welchem er elektrisch von dem Verbindungsmittel (3) des elektronischen Geräts getrennt ist.

4. Elektronisches Gerät nach Anspruch 1,
wobei der Batteriesatz (2) auf Basis einer Änderung eines Signalniveaus der Taktleitung (3i) oder der Datenleitung (3h) zur Zeit eines ersten Zustands, in welchem die Datenleitung (3h) und die Taktleitung (3i) des elektronischen Geräts auf das Niveau einer Energieversorgungsleitung mit niedriger Impedanz gesetzt werden und Energie von dem Batteriesatz (2) zu dem elektronischen Gerät geliefert wird in einem initialen Zustand des Verbindens des Batteriesatzes (2) mit dem elektronischen Gerät und Kommunikation zwischen dem Batteriesatz (2) und dem elektronischen Gerät nicht stattfindet, auf der Basis von Gegenwart oder Abwesenheit eines Signals auf der Datenleitung (3h) oder der Taktleitung (3i) zur Zeit eines zweiten Zustands, in welchem Energie vom Batteriesatz (2) zum elektronischen Gerät geliefert wird und Kommunikation zwischen dem Batteriesatz (2) und dem elektronischen Gerät stattfindet, und auf Basis von einer Änderung eines Signalniveaus der Datenleitung (3h) oder der Taktleitung (3i) zur Zeit eines dritten Zustands, in welchem Energie nicht vom Batteriesatz (2) zu dem elektronischen Gerät geliefert wird, erkennt, ob der Batteriesatz (2) in dem Zustand ist, in welchem er elektrisch mit dem Verbindungsmittel (3) des elektronischen Geräts verbunden ist, oder in dem Zustand, in welchem er elektrisch von dem Verbindungsmittel (3) des elektronischen Geräts getrennt ist.

5. Elektronisches Gerät nach Anspruch 1,
wobei der Batteriesatz (2) auf Basis einer Änderung eines Signalniveaus der Taktleitung (3i) oder der Datenleitung (3h) zur Zeit eines ersten Zustands, in welchem eine Energieversorgungsleitung, welche mit der Datenleitung (3h) und der Taktleitung (3i) des elektronischen Geräts verbunden ist, eine niedrige Impedanz zur Zeit des Ladens des Batteriesatzes (2) aufweist und in welchem Energie von dem Batteriesatz (2) zu dem elektronischen Gerät geliefert wird in einem initialen Zustand des elektrischen Verbindens des Batteriesatzes (2) mit dem elektronischen Gerät und indem Kommunikation zwischen dem Batteriesatz (2) und dem elektronischen Gerät nicht ausgeführt wird, auf Basis von Gegenwart oder Abwesenheit eines Signals auf der Datenleitung (3h) oder der Taktleitung (3i) zu der Zeit eines zweiten Zustands, in welchem Energie von dem Batteriesatz (2) zu dem elektronischen Gerät geliefert wird und Kommunikation zwischen dem Batteriesatz (2) und dem elektronischen Gerät stattfindet, und auf Basis einer Änderung eines Signalniveaus der Datenleitung (3h) oder der Taktleitung (3i) zur Zeit eines dritten Zustands, in welchem Energie von dem Batteriesatz (2) zu dem elektronischen Gerät nicht geliefert wird, erkennt, ob der Batteriesatz (2) in dem Zustand ist, in welchem er elektrisch mit dem Verbindungsmittel (3) des elektronischen Geräts verbunden ist, oder in dem Zustand, in welchem er elektrisch von dem Verbindungsmittel (3) des elektronischen Geräts getrennt ist.

6. Elektronisches Gerät nach Anspruch 1,
wobei die Kommunikationsleitung zwischen dem Batteriesatz (2) und dem elektronischen Gerät angeordnet ist und eine Datenleitung (3h) zum Senden/Empfangen von Daten aufweist um auf Basis des Zustands eines Signals auf der Datenleitung (3h) zu erkennen, ob der Batteriesatz (2) in dem Zustand ist, in welchem er elektrisch mit dem Verbindungsmittel (3) des elektronischen Geräts verbunden ist, oder in einem Zustand, in welchem er elektrisch von dem Verbindungsmittel (3) des elektronischen Geräts getrennt ist.

7. Elektronisches Gerät nach Anspruch 6,
wobei der Batteriesatz (2) entsprechend einer Anwesenheit oder Abwesenheit eines Signals auf der Datenleitung (3h), wenn Energie vom Batteriesatz (2) zu dem elektronischen Gerät in einem initialen Zustand des Verbindens des Batteriesatzes (2) mit dem elektronischen Gerät geliefert wird und Kommunikation zwischen dem Batteriesatz (2) und dem elektronischen Gerät stattfindet, erkennt, ob der Batteriesatz (2) in einem Zustand ist, in welchem er elektrisch mit dem Verbindungsmittel (3) des elektronischen Geräts verbunden ist oder in einem Zustand, in welchem er elektrisch von dem Verbindungsmittel (3) des elektronischen Geräts getrennt ist.

8. Elektronisches Gerät nach Anspruch 6,
wobei der Batteriesatz (2) auf Basis einer Änderung eines Signalniveaus der Datenleitung (3h) zur Zeit eines ersten Zustand, in welchem Energie von dem Batteriesatz (2) zu dem elektronischen Gerät geliefert wird in einem initialen Zustand des Verbindens des Batteriesatzes (2) mit elektronischen Gerät, und indem Kommunikation zwischen dem Batteriesatz (2) und dem elektronischen Gerät nicht stattfindet, auf Basis von Gegenwart oder Abwesenheit eines Signals auf der Datenleitung (3h) zur Zeit eines zweiten Zustands, in welchem Energie von dem Batteriesatz (2) zu dem elektronischen Gerät geliefert wird und Kommunikation zwischen dem Batteriesatz (2) und dem elektronischen Gerät stattfindet, und auf Basis einer Änderung eines Signalniveaus auf der Datenleitung (3h) zu der Zeit eines dritten Zustands, in welchem keine Energie von dem Batteriesatz (2) zu dem elektronischen Gerät geliefert wird, erkennt, ob der Batteriesatz (2) in dem Zustand, in welchem er elektrisch mit dem Verbindungsmittel (3) des elektronischen Geräts verbunden ist, oder in dem Zustand, in welchem er elektrisch von dem Verbindungsmittel (3) des elektronischen Geräts getrennt ist.

9. Verfahren zum Erkennen des Ladens eines Batteriesatzes (2), wobei das Verfahren geeignet ist, einen Batteriesatz (2) lösbar durch ein elektronisches Verbindungsmittel (3) in ein elektronisches Gerät zu verbinden, um **dadurch** das elektronische Gerät mit Energie zu versorgen,
wobei der Batteriesatz (2) durch Verwenden einer Kommunikationsleitung zum Senden/Empfangen von Information zwischen Batteriesatz (2) und dem elektronischen Gerät erkennt, ob der Batteriesatz (2) in einem Zustand ist, in welchem er elektrisch mit dem Verbindungsmittel (3) des elektronischen Geräts verbunden ist, oder in einem Zustand, in welchem er elektrisch von dem Verbindungsmittel (3) des elektronischen Geräts getrennt ist,
wobei die Kommunikationsleitung eine Datenleitung zum Senden/Empfangen von Daten zwischen dem Batteriesatz (2) und dem elektronischen Gerät und eine Taktleitung (3i), welche vom elektronischen Gerät mit einem Takt beschickt wird, aufweist um auf Basis einer Kombination von Zuständen von Signalen auf der Datenleitung und der Taktleitung (3i) zu erkennen, ob der Batteriesatz (2) in einem Zustand ist, in welchem er elektrisch mit dem Verbindungsmittel (3) des elektronischen Geräts verbunden ist, oder in einem Zustand, in welchem er elektrisch von dem Verbindungsmittel (3) des elektronischen Geräts getrennt ist.

10. Verfahren zum Erkennen eines Ladens eines Batteriesatzes (2) nach Anspruch 9,
wobei die Kommunikationsleitung eine Datenleitung zum Senden/Empfangen von Daten zwischen dem Batteriesatz (2) und dem elektronischen Gerät aufweist um auf Basis des Zustands eines Signals auf der Datenleitung zu erkennen, ob der Batteriesatz (2) in einem Zustand ist, in welchem er elektrisch mit dem Verbindungsmittel (3) des elektronischen Geräts verbunden ist, oder in einem Zustand, in welchem er elektrisch von dem Verbindungsmittel (3) des elektronischen Geräts getrennt ist.

## Revendications

1. Système d'équipement électronique comportant un bloc de batterie (2) et un équipement électronique dans lequel le bloc de batterie (2) est chargé de façon amovible par l'intermédiaire d'une partie de connexion électrique (3) de sorte que l'alimentation électrique est effectuée par le bloc de batterie (2),
dans lequel le bloc de batterie (2) est adapté pour détecter, lors de l'utilisation d'une ligne de communication pour une transmission/réception d'une information entre le bloc de batterie (2) et l'équipement électronique, si le bloc de batterie (2) se trouve dans un état électriquement connecté à la partie de connexion (3) de l'équipement électronique ou dans un état électriquement détaché de la partie de connexion (3) de l'équipement électronique, le système étant **caractérisé en ce que**
la ligne de communication est constituée d'une ligne de données (3h) disposée entre le bloc de batterie (2) et l'équipement électronique et adaptée pour effectuer une transmission/réception de données, et une ligne d'horloge (3i) disposée entre le bloc de batterie (2) et l'équipement électronique et alimentée par l'horloge par l'intermédiaire de celui-ci, et le bloc de batterie (2) est adapté pour détecter, en fonction de la combinaison des états des signaux sur la ligne de données (3h) et sur la ligne d'horloge (3i), si le bloc de batterie (2) se trouve dans l'état électriquement connecté à la partie de connexion (3) de l'équipement électronique ou dans l'état électriquement détaché de la partie de connexion (3) de l'équipement électronique.

2. Système d'équipement électronique selon la revendication 1, dans lequel le bloc de batterie (2) détecte, selon la présence ou l'absence d'un signal sur la ligne de données (3h) ou la ligne d'horloge (3i) si de l'énergie est délivrée depuis le bloc de batterie (2) à l'équipement électronique en tant qu'état initial lors de la connexion électrique du bloc de batterie (2) à l'équipement électronique et une communication est effectuée entre le bloc de batterie (2) et l'équipement électronique, pour savoir si le bloc de batterie (2) se trouve dans l'état électriquement connecté à la partie de connexion (3) de l'équipement électronique ou dans l'état électriquement détaché de la partie de connexion (3) de l'équipement électronique.

3. Système d'équipement électronique selon la revendication 1, dans lequel le bloc de batterie (2) détecte, en fonction d'un changement du niveau de signal de la ligne d'horloge (3i) ou de la ligne de données (3h) au moment d'un premier état où la ligne de données (3h) et la ligne d'horloge (3i) de l'équipement électronique sont tirées vers une ligne d'alimentation placée dans l'état d'impédance élevée, une énergie est délivrée depuis le bloc de batterie (2) à l'équipement électronique en tant qu'état initial lors de la connexion électrique du bloc de batterie (2) à l'équipement électronique et une,communication n'est pas effectuée entre le bloc de batterie (2) et l'équipement électronique, la présence ou l'absence de signal sur la ligne de données (3h) ou la ligne d'horloge (3i) au moment du second état lorsque l'énergie est délivrée depuis le bloc de batterie (2) à l'équipement électronique et une communication est effectuée entre le bloc de batterie (2) et l'équipement électronique, et un changement de niveau de signal de la ligne d'horloge (3i) ou la ligne de données (3h) au moment d'un troisième état lorsque l'énergie n'est pas délivrée depuis le bloc de batterie (2) à l'équipement électronique, si le bloc de batterie (2) se trouve dans l'état électriquement relié à la partie de connexion (3) de l'équipement électronique ou dans l'état électriquement détaché de la partie de connexion (3) de l'équipement électronique.

4. Système d'équipement électronique selon la revendication 1, dans lequel le bloc de batterie (2) détecte, en fonction du changement de niveau de signal de la ligne d'horloge (3i) ou de la ligne de données (3h) au moment d'un premier état lorsque la ligne de données (3h) et la ligne d'horloge (3i) de l'équipement électronique sont tirées vers une ligne d'alimentation placée dans l'état de faible impédance, et une énergie est délivrée depuis le bloc de batterie (2) à l'équipement électronique en tant qu'état initial lors de la connexion électrique du bloc de batterie (2) à l'équipement électronique et une communication n'est pas effectuée entre le bloc de batterie (2) et l'équipement électronique, la présence ou l'absence d'un signal sur la ligne de données (3h) ou la ligne d'horloge (3i) au moment d'un second état lorsque de l'énergie est délivrée depuis le bloc de batterie (2) à l'équipement électronique et une communication est effectuée entre le bloc de batterie (2) et l'équipement électronique, et un changement de niveau de signal de la ligne de données (3h) ou de la ligne d'horloge (3i) au moment d'un troisième état où de l'énergie n'est pas délivrée depuis le bloc de batterie (2) à l'équipement électronique, si le bloc de batterie (2) se trouve dans l'état électriquement relié à la partie de connexion (3) de l'équipement électronique ou dans l'état électriquement détaché de la partie de connexion (3) de l'équipement électronique.

5. Système d'équipement électronique selon la revendication 1, dans lequel le bloc de batterie (2) détecte, en fonction d'un changement de niveau de signal de la ligne d'horloge (3i) ou de la ligne de données (3h) au moment d'un premier état où la ligne d'alimentation reliée à la ligne de données (3h) et la ligne d'horloge (3i) de l'équipement électronique est amenée à présenter une faible impédance au moment de la charge du bloc de batterie (2), et de l'énergie est délivrée depuis le bloc de batterie (2) à l'équipement électronique en tant qu'état initial lors de la connexion électrique du bloc de batterie (2) à l'équipement électronique et une communication n'est pas effectuée entre le bloc de batterie (2) et l'équipement électronique, la présence ou l'absence d'un signal sur la ligne de données (3h) ou la ligne d'horloge (3i) au moment d'un second état où l'énergie est délivrée depuis le bloc de batterie (2) à l'équipement électronique et une communication est effectuée entre le bloc de batterie (2) et l'équipement électronique, et un changement de niveau de signal de la ligne de données (3h) ou de la ligne d'horloge (3i) au moment d'un troisième état lorsque de l'énergie n'est pas délivrée depuis le bloc de batterie (2) à l'équipement électronique, si le bloc de batterie (2) se trouve dans l'état électriquement relié à la partie de connexion (3) de l'équipement électronique ou dans l'état électriquement détaché de la partie de connexion (3) de l'équipement électronique.

6. Système d'équipement électronique selon la revendication 1, dans lequel la ligne de communication est disposée entre le bloc de batterie (2) et l'équipement électronique et est constituée d'une ligne de données (3h) pour effectuer une transmission/réception de données à détecter, en fonction de l'état d'un signal sur la ligne de données (3h), le bloc de batterie (2) se trouve dans l'état électriquement relié à la partie de connexion (3) de l'équipement électronique ou dans l'état électriquement détaché de la partie de connexion (3) de l'équipement électronique.

7. Système d'équipement électronique selon la revendication 6, dans lequel le bloc de batterie (2) détecte, selon la présence ou l'absence d'un signal sur la ligne de données (3h) lorsque de l'énergie est délivrée depuis le bloc de batterie (2) à l'équipement électronique en tant qu'état initial lors de la connexion électrique du bloc de batterie (2) à l'équipement électronique et une communication est effectuée entre le bloc de batterie (2) et l'équipement électronique, si le bloc de batterie (2) se trouve dans l'état électriquement relié à la partie de connexion (3) de l'équipement électronique ou dans l'état électriquement détaché de la partie de connexion (3) de l'équipement électronique.

8. Système d'équipement électronique selon la revendication 6, dans lequel le bloc de batterie (2) détecte, en fonction du changement du niveau de signal sur la ligne de données (3h) au moment d'un premier état lorsque de l'énergie est délivrée depuis le bloc de batterie (2) à l'équipement électronique en tant qu'état initial lors de la connexion électrique du bloc de batterie (2) à l'équipement électronique et une communication n'est pas effectuée entre le bloc de batterie (2) et l'équipement électronique, la présence ou l'absence d'un signal sur la ligne de données (3h) au moment d'un second état lorsque de l'énergie est délivrée depuis le bloc de batterie (2) à l'équipement électronique et une communication est effectuée entre le bloc de batterie (2) et l'équipement électronique, et un changement de niveau de signal de la ligne de données (3h) au moment d'un troisième état lorsqu'aucune énergie n'est délivrée depuis le bloc de batterie (2) à l'équipement électronique, si le bloc de batterie (2) se trouve dans l'état électriquement relié à la partie de connexion (3) de l'équipement électronique ou dans l'état électriquement détaché de la partie de connexion (3) de l'équipement électronique.

9. Procédé de détection de charge pour un bloc de batterie (2), qui est adapté pour effectuer de façon amovible la charge d'un bloc de batterie (2) par l'intermédiaire d'une partie de connexion électrique (3) concernant un équipement électronique pour ainsi effectuer une alimentation d'énergie à l'équipement électronique,
dans lequel le bloc de batterie (2) détecte, en utilisant une ligne de communication pour effectuer une transmission/réception de l'information entre le bloc de batterie (2) et l'équipement électronique, si le bloc de batterie (2) se trouve dans l'état électriquement connecté à la partie de connexion (3) de l'équipement électronique, ou dans l'état électriquement détaché de la partie de connexion (3) de l'équipement électronique,
dans lequel la ligne de communication est constituée d'une ligne de données pour effectuer une transmission/réception de données entre le bloc de batterie (2) et l'équipement électronique et une ligne d'horloge (3i) alimentée par l'horloge depuis l'équipement électronique pour détecter, en fonction d'une combinaison d'états de signaux sur la ligne de données et la ligne d'horloge (3i), si le bloc de batterie (2) se trouve dans l'état électriquement relié à la partie de connexion (3) de l'équipement électronique ou dans l'état électriquement détaché de la partie de connexion (3) de l'équipement électronique.

10. Procédé de détection de charge pour un bloc de batterie (2) selon la revendication 9, dans lequel la ligne de communication est constituée d'une ligne de données pour effectuer une transmission/réception de données entre le bloc de batterie (2) et l'équipement électronique pour détecter, en fonction de l'état d'un signal sur la ligne de données, si le bloc de batterie (2) se trouve dans l'état électriquement relié à la partie de connexion (3) de l'équipement électronique ou dans l'état électriquement détaché de la partie de connexion (3) de l'équipement électronique.

**FIG.1**

EP 0 917 229 B1

# FIG.2

EP 0 917 229 B1

**FIG.3**

**FIG.4**

**FIG.5**

EP 0 917 229 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5625237 A

- JP 8019184 B